# EUROPEAN PATENT APPLICATION

(11) **EP 1 367 370 A1**
(43) Date of publication of application: **03.12.2003**
(21) Application number: 03076453.4
(22) Date of filing: 15.05.2003
(51) Int. Cl.: G01F 15/06

(54) **Fluid consumption cost indicator**

(30) Priority: 31.05.2002 BE 200200355
(71) Applicant: Luyten, E.L.J.V., 2980 Zoersel (BE)
(72) Inventor: Luyten, E.L.J.V., 2980 Zoersel (BE)

(57) **Abstract**

The invention is related to a device that is mountable by means of a connecting device in or on a fluid outlet, preferably a water tap, whereby the device comprises a flow sensor and microprocessor in order to calculate the instantaneous water usage costs of the water flowing through the device, based on the water price entered by the user, and show these costs on a display mounted on the device.

## Description

The summary of the invention is a device mountable in or on a fluid outlet, which displays the costs of the used fluid during use of the fluid outlet. The invention is in particular a device with a display coupled or mounted on or in a domestic water outlet, such as a water tap, which displays the instantaneous costs in local currency of the water usage to the user of the device.

In modern housekeeping there is multiple water usage such as washing hands, flushing the toilet, bathing/showering, etc. Currently the costs for this water usage are registered by means of a water meter, placed between the main water supply of the water supplier and water piping of the inhabitant. The water supplier uses the yearly readouts on the water meter in order to charge the user for the amount of water used during the period.

A disadvantage of this way of cost calculation is the time span between actual use and the time of payment. Another disadvantage is that the current way of billing does not indicate the individual contribution of different water users on the total usage. Because of this it is for a user not possible to asses the specific costs part of, for example, his shower or his use of the garden hose. Because of this lack of information with respect to the direct, instantaneous costs per water consumer he is not able to change his water consumption behaviour directly but can only do so at the end of the billing period. This means that an instant water saving strategy is not realisable.

The current situation with respect to the determination of water costs and water billing by means of a central water meter does not allow a settlement of costs somewhere between existing billing intervals in the case when there are multiple users on one water line. An example is for instance the individual use of one water supply in a student fraternity house. In practice the number of users will divide the total cost billed but this is but an approximate of the individual costs and does not account for real individual water usage. Yet another example is a person using his neighbour's water hose to wash his car. Here it is also impossible to asses the real costs of the water usage and renders financial compensation for this to be difficult.

It is known for the prior art document W00122096A a device that visualises for the user the current water flow and temperature. Although that this device provides an indication of the used volume of water it does not give any information with respect to the costs in local currency during the use of the water tap.

The purpose of this invention is to overcome the problems mentioned above by means of a device which is mountable in a simple way on or in an individual water outlet and which displays the instantaneous costs in local currency during water usage and displays this amount in currency on a display.

In a preferred embodiment the display device comprises a housing in which is mounted a lcd-display to display the instantaneous water usage in Euros and fractions of Euros by means of a fluid flow sensor, microprocessor en power source mounted in the device.

The housing further comprises on the top or inlet side means to connect the device to an existing water outlet. The display device has the possibility to set the local price per volume of water and the currency symbol belonging to this pricing. A memory function makes it possible to display the cumulative costs on the display.

Preferably the device also comprises a connecting device on the bottom or outlet side. This allows the device to be mounted between, for instance, a water tap and a washing machine or garden hose because of the double connectors. The device comprises also preferably one more buttons that make it possible to switch between current water costs or cumulative costs or to reset the cumulative costs. Preferably the device comprises a microprocessor control that switches of the display after a set period in order to limit the power consumption of the device. It is further desirable to have a display illumination which is switchable by means of the control buttons or which switches on when the microprocessor detects a water flow through the device. It is further possible to have the current time displayed when there is no water usage detected.

In another embodiment the display device has the possibility to switch from displaying the water cost to displaying the current flow in millilitres (ml), centilitres (cl), decilitres (dl), etc in order to provide a measurement function for assistance during the preparation of food. In another embodiment the device is pre-mounted in a water outlet such as for instance a kitchen water tap, showerhead or bath tap.

It is preferred to have incorporated in the device an acoustic and/or visual signal when a predetermined limit of currency or flow for water usage is reached or surpassed. Furthermore the device can get its power from a power source mounted in the device or via a power generator mounted in the device.

These and other features of the invention will hereafter be described in relation with the figures in a not limiting manner.

Fig. 1 shows the flow diagram of the display device for measuring the flow through the device and for calculating the instant water usage and the cumulative water usage in local currency.

Fig. 2 shows the device according to the invention in a frontal view.

Fig. 3 shows the device according to the invention from a top view.

Fig. 4 shows a cross-section of the device according to the invention, mounted on a water outlet, with some parts omitted for reasons of clarity.

Fig. 5 shows a cross-section of the device according to the invention, mounted in a water outlet, with some parts omitted for reasons of clarity.

Fig. 6 shows an exploded view of the device according to the invention connected by means of a quick release connection to a water outlet and a flexible hose.

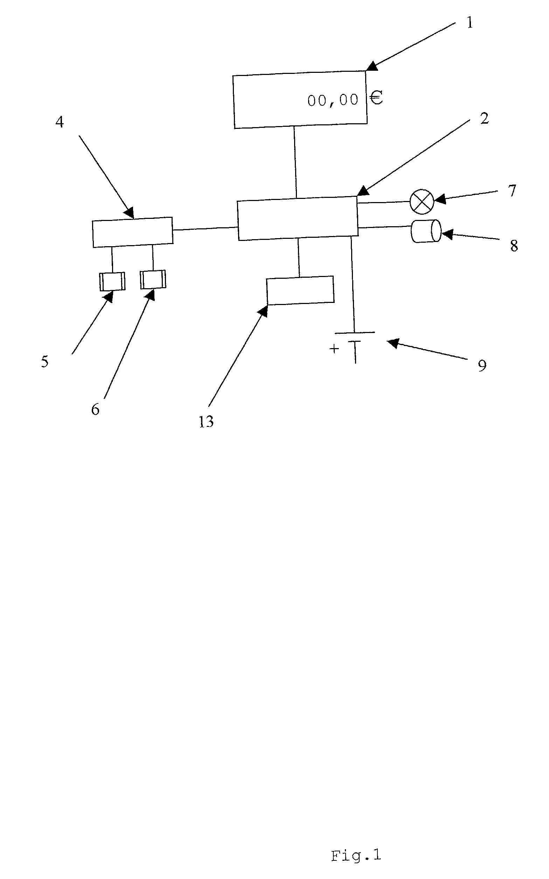

Fig.1 shows the block diagram of the integrated circuit for the device 100 in order to calculate the instantaneous and cumulative costs. The lcd-display 1 gives the user information about the usage costs via signals coming from processor 2. The processor receives its signals from volume sensor 13 and calculates by means of the set parameters in the memory 4 the cost of the water usage in the chosen currency or the use of water in millimetres dependant on the chosen function via the control buttons 5 or 6.

The volume sensor 13 is preferably a so called vortex volume sensor but might as well be any of a electromagnetic, paddle wheel, spindle, turbine, mass flow (coriolis), ultrasonic or any other suitable volume sensor. The processor 2 sends a signal to led 7 and/or speaker as warning signal 8 when a user defined value is surpassed.

The switching in fig.1 has an energy source 9 but might as well be fed energy from a not shown energy-producing source that makes uses of the kinetic energy of the fluid that is passing through the device 100.

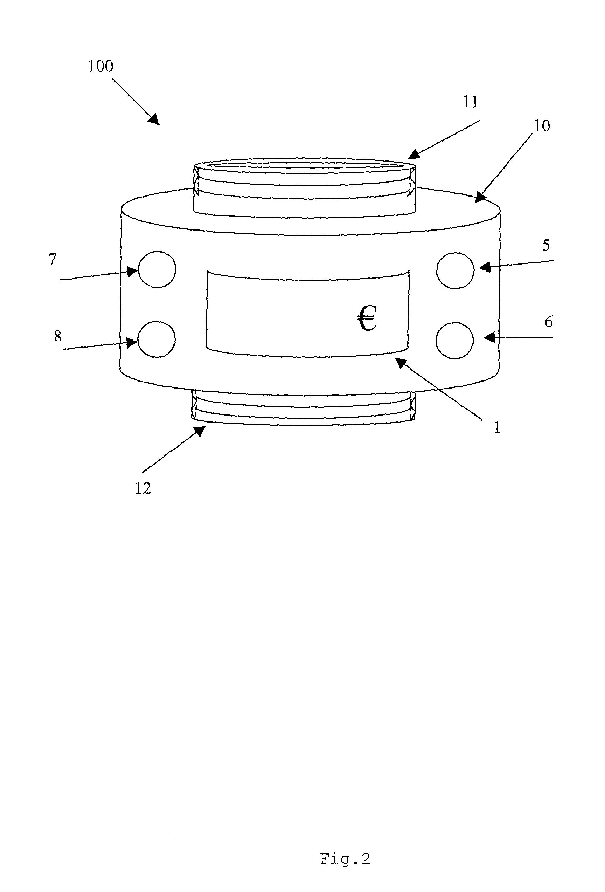

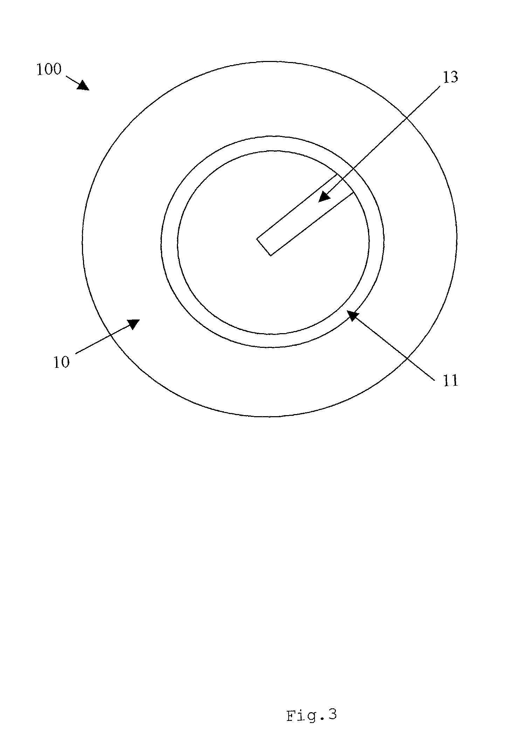

Fig. 2 and 3 depict the top and side view of the display device 100. The device 100 preferably comprises a plastic housing of cylindrical shape made by for example injection moulding but can have any other suitable geometrical shape. The display 1 is mounted in the housing 10 together with the electrical switching from fig.1, not shown here. On the right hand side of the display there are mounted control buttons 5 and 6. On the left side there are mounted led 7 and speaker 8. The top view of device 100 from fig.3 shows the opening in the device 100 through which the fluid passes. In the figure a part of the volume sensor 13 is shown.

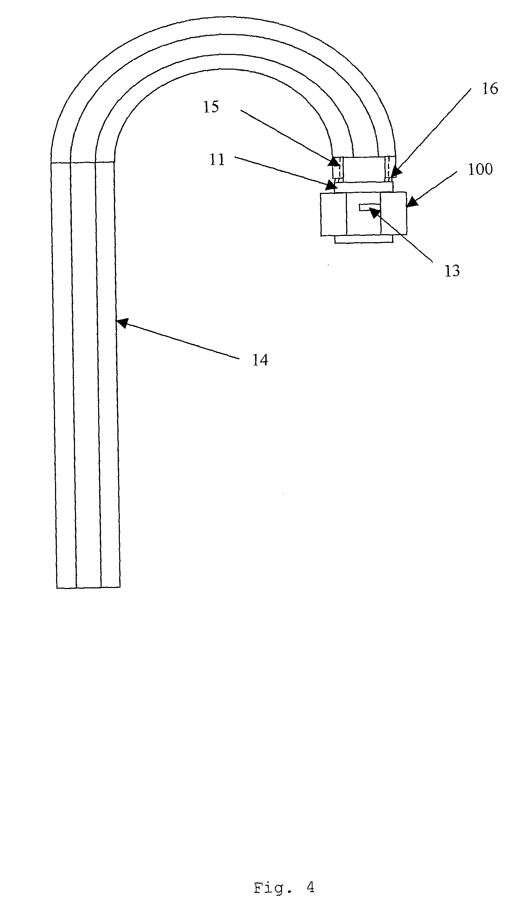

Connected to the inlet and outlet of the device there is mounted a connector 11 and 12 in order to mount the device on a water outlet as shown in fig.4. The device 100 is mounted in fig. 4 by way of example on a kitchen water tap, mounted on a not depicted kitchen work plate, but might be any kind of water outlet such as a shower tap, bath tap, garden tap or wash machine tap. The cross-section fig.4 shows clearly how the device 100 is mounted via a connector 11 on the internal threading 15 of a water outlet with the help of a seal 16. In fig. 4 the connector 11 is screwed but any other joining means are possible such a glueing, welding or by means of snapping.

Connectors 11 and 12 comprise adaptors that allow the mounting of the device on water outlets having different kinds of internal and or external threading. Connector 11 can also comprise a flexible coupling such as a ball joint; this allows the user to adjust the orientation of the display to his or hers personal likings. It also gives the user the possibility to change the direction of the water flow.

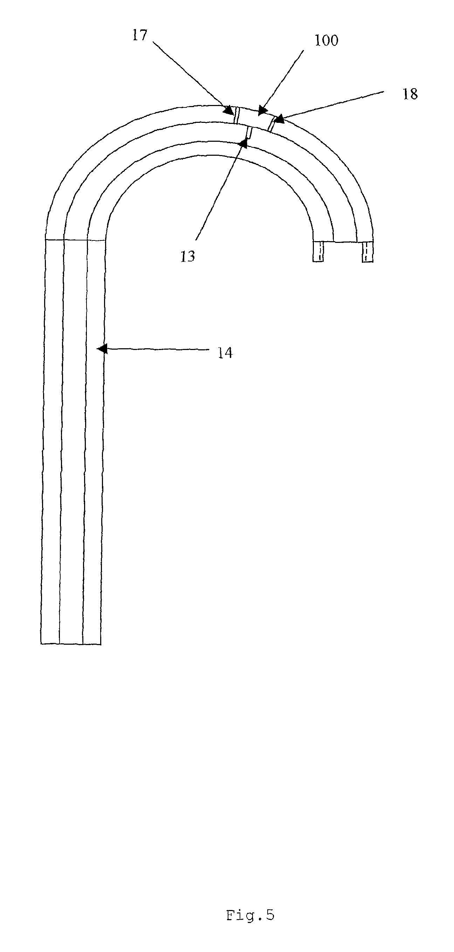

Fig. 5 shows the device 100 mounted in a part of a water outlet. Housing 10 and connectors 11 and 12 are no longer present as the device 100, display 1, control buttons 5 and 6, led 7 and speaker 8 are mounted in an opening in the water outlet with a waterproof sealant, the volume sensor 13 is placed in the flow path of the fluid. The device 100 in fig. 5 is mounted near the outlet but can also be placed anywhere in the proximity of the flow path.

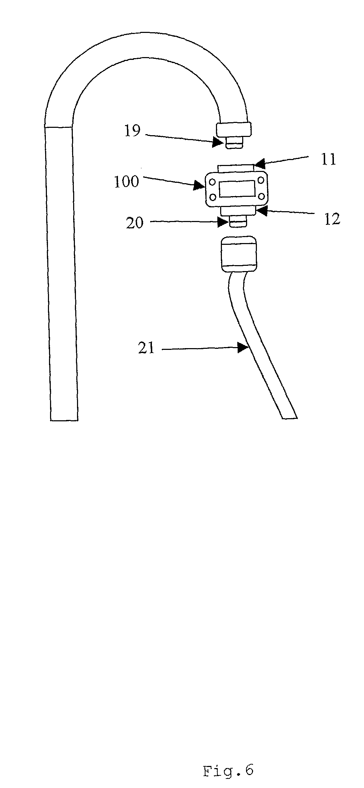

Fig. 6 shows a preferred embodiment of the invention where the device 100 comprises standardised inlet and outlet connectors 11, 12 of the quick release type know for example under the brand name Gardena ®. These connectors 19,20 allow a fast and simple mounting of the device between a water outlet and different sorts of appliances such as a garden hose 21. The device 100 is also mountable between the garden hose 21 and for instance a spraying nozzle allowing the user to constantly monitor the instant costs incurred.

The instructions before use and the different kind of settings, which can be stored in the memory of the device, will now be described by means of fig.1 until fig. 3.

After mounting the device 100 via connectors 11,12 on a fluid outlet the settings concerning the local currency and the price of the fluid going through the device need to be configured. In a preferred embodiment the currency is the EURO and the fluid is municipal drinking water, any other kind of fluid or currency is also possible. The control buttons 5 and 6 have two functions: during normal use control button 5 is set up to switch between the display of instantaneous costs and cumulative costs in currency and control button 6 is set to switch between the display of instantaneous costs and the display of instant current) use in millilitre (ml) or any other unit of volume such as decilitre (dl), litre (1), centilitre (cl). This function is particularly helpful during the preparation of recipies that need a fixed amount of water volume added and renders a measuring cup obsolete.

When control buttons 5 and 6 are pressed together for more than 2 seconds the processor 2 switches into programming mode 1. Pressing the control buttons together again for more than 2 seconds switches the processor into programming mode 2 and a third time into programming mode 3. To return to the normal operation the control buttons 5 and 6 are to be pressed together again for more than 2 seconds.

In programming mode the function of the control buttons 5 and 6 changes from switching function into scroll function in order to allow scrolling through the memory 4, an EPROM of processor 2. Control button 5 is scroll forward and control button 6 scroll backwards.

Mode 1 allows the user to scroll through the memory to find the appropriate currency. In memory there are several presets, such as Euro, US Dollar and Pound Sterling but any other currency is possible.

When the right currency is found the setting is activated and is stored in memory after shortly pressing together the two control buttons 5 and 6. The active setting is used to calculate the costs and to display the appropriate symbol for the currency on the display.

Mode 2 allows the user to enter and store the cost of the drinking water per volume, e.g. litre, again with control buttons 5 and 6. Shortly pressing together the two control buttons 5 and 6 activates the setting as active setting for calculating the water costs.

Mode 3 gives the possibility to set, by means of control buttons 5 and 6, a limit to the costs of water usage. The limit is set in the currency as activated in mode 1, the active currency. When during use the limit is exceeded the led 7 will emit light and the speaker will send out an audible warning in order to indicate that the set limit is exceeded.

The settings of mode 1 and 2 are necessary for the first use of the device 100, mode 3 is optional. After setting the currency and the price the device 100 is ready for use.

When the water outlet is used the volume sensor 13 detects a water flow through the device 100 and the processor 2 multiplies the amount of flow with the active settings for the water costs and displays the instant water costs and the appropriate symbol on the display 1. The processor 2 also activates the display illumination; the display illumination is switched off when no water usage is registered for more than 3 seconds.

The instantaneous usage is summed each time by processor 4 so that the cummulative costs can be, if the user so requires, displayed on the display after pressing on control button 5. If the user presses on control button 6, the device switches to the measuring mode where the device displays the instantaneous cumulative usage in the volume unit activated. In this mode the display does not display the currency symbol but the symbol connected to the activated volume unit, e.g. ml for millilitre. This allows the user to use the water outlet so long for the display to show the needed fluid volume in millilitre. Pressing control button 6 again activates the standard function and display 1 displays again the instantaneous costs of the water usage and on user request the cumulative costs of water usage including the activated currency symbol.

## Claims

1. Device 100, comprising a housing 10 having a connecting means 11,12 on the inlet side and preferably also on the outlet side in order to connect the device onto a water outlet **characterized by** a control circuit having a display 1 and the circuit preferably comprising two control buttons 5 and 6, a led 7, a speaker 8, a processor 2, a memory 4, a flow sensor 13, and an energy source 9 in order to supply energy to the circuit whereby the device 100 calculates the instantaneous costs of the water usage for example in Euros of the water flowing through the device and displays them on the display 1 of the device 100.

2. Device according to claim 1 **characterized by** means that allow to change the currency from Euro in any other currency and the appropriate currency symbol indicating this currency.

3. Device according to at least one of the previous claims **characterized by** means that allow changing the water price, used by the processor 2 to calculate the water usage, in the locally used water price.

4. Device according to at least one of the previous claims **characterized in that** the processor has its energy supplied by an energy source that gets its energy from the fluid flow through the device 100.

5. Device according to at least one of the previous claims **characterized in that** there is a memory function that allows displaying next to the instantaneous costs of the water usage the cumulative costs on the display 1.

6. Device according to at least one of the previous claims **characterized in that** there are means to activate the illumination of the display when the processor 2 detects usage and to deactivate the illumination when there is no usage.

7. Device according to at least one of the previous claims **characterized in that** there is a function present whereby the device does not display the instantaneous costs of water usage but displays the instantaneous cumulative usage in a selected volume unit, e.g. millilitres (ml) and the appropriate symbol in order to determine the amount of water used.

8. Device according to at least one of the previous claims **characterized in that** the flow sensor 13 used to determine the fluid flow is a vortex flow sensor, a electromagnetic flow sensor, a turbine flow sensor, a paddle wheel flow sensor, a spindle flow sensor, a mass-flow (coriolis) flow sensor or a ultrasonic flow sensor.

9. Device according to at least one of the previous claims **characterized in that** the connecting means are standardised quick release connectors know e.g. under the brand name Gardena®.

10. Device according to at least one of the previous claims **characterized in that** there is the possibility to set a maximum usage limit that activates an acoustic and/or visual signal in or on the device when exceeded.

11. Device according to at least one of the previous claims **characterized in that** the device has a connecting means on the inlet side that allow the user to orient the device.

12. Water outlet **characterized in that** a device according to at least one of the previous claims is mounted on the outlet opening.

13. Water outlet **characterized in that** a device according to at least one of the previous claims is mounted in the housing of the water outlet in the proximity of the outlet opening.
